# EUROPEAN PATENT SPECIFICATION

(11) **EP 0 287 736 B1**
(45) Date of publication and mention of the grant of the patent: **03.11.1993**
(21) Application number: 87310987.0
(22) Date of filing: 14.12.1987
(51) Int. Cl.: C09D 175/04, C08F 299/06, C08G 18/67

(54) **Radiation curable compositions for hydrophilic coatings**
Strahlungsvernetzbare Zusammensetzungen für hydrophile Beschichtungen
Compositions durcissables par irradiation pour revêtements hydrophiles

(30) Priority: 21.04.1987 US 40955
(43) Date of publication of application: 26.10.1988
(73) Proprietor: W.L. GORE & ASSOCIATES, INC., Newark, Delaware 19714-9206 (US)
(72) Inventor: Henn, Robert L., Wilmington Delaware 19810 (US); Morell, Carol H., Hockessin Delaware 19707 (US)
(74) Representative: Kador & Partner

(56) References cited:
- DE-A- 2 535 503
- GB-A- 2 095 271
- US-A- 4 188 455
- CHEMICAL ABSTRACTS, vol. 79, no. 16, 22nd October 1973, page 29, no. 92999q, Columbus, Ohio, US; & JP-A-73 47 538

## Description

This invention relates to a process for making a coating in accordance with the precharacterizing part of claim 1.

In general, radiation curable systems are essentially 100% reactive systems, also referred to as 100% solid systems, where substantially all of the components react to produce the final product. Such systems can be cured by exposure to high energy, ionizing radiation or to ultraviolet radiation in the presence of photoinitiators. It is desirable to have coating compositions made from a radiation curable liquid coating composition. And more specifically, it is extremely desirable to have radiation curable, liquid, hydrophilic coating compositions.

Radiation curable liquid coating composition comprising an acrylate capped polyurethane oligomer of a polyoxymethylene glycol, a diisocyanate at a ratio of twice the equivalent weight of the polyoxymethylene glycol and a hydroxyalkyl acrylate, as well as a reactive diluent are known (DE-A-2 535 503). The oligomer is cured by exposure to radiation. However, these known compositions are relatively hard and brittle when cured. Furthermore, hydrophilic radiation curable liquid coating compositions are not readily available.

Hydrophilic, as used herein, means a material that is water transmitting and water absorbing. Radiation curable liquid coating compositions having suitable physical properties while maintaining substantial water transmitting and water absorbing characteristics have not been achieved heretofore.

Furthermore, in coating applications, it is usually a requirement to have suitable physical properties to allow for good performance. These applications frequently demand coatings which are pliable. The high crosslink density achieved with radiation curable compositions has usually offered a product of a brittle and hard nature. Concomittant loss of moisture transmitting and water absorbing characteristics is also seen with the higher crosslink density of the prior art composition.

According to the present invention there is provided a process for making a coating which has hydrophilic properties as well as suitable physical properties for coating applications.
This is attained by the process according to claim 1.

The process of the present invention results in a hydrophilic coating having useful physical properties. These hydrophilic polymers provide for high water transmission and water absorbancy. Furthermore, the invention is concerned with hydophilic coatings that upon curing have little or no odour that is frequently encountered in acrylated systems. Another aspect of this invention is that it provides soft yet tough radiation curable hydrophilic coatings.

A radiation curable liquid coating can be formed, in accordance with the invention, which cures on radiation exposure to form a water transmitting and water absorbing soft and tough coating. Preferably the hydroxyalkyl acrylate is 1,4-butanediol monoacrylate at a deficiency of stoichiometry to afford a final radiation curable oligomer terminated in both acrylate and isocyanate functionalities wherein the isocyanate functionality has a percent NCO less than or equal to 1.5%. Furthermore, the reactive diluent is preferably a low odour reactive diluent, such as N-vinyl pyrrolidone, added in an amount less than 20% and, preferably less than or equal to 15%. Where appropriate, a UV phooinitiator package is added to achieve the UV radiation curing. Optionally, a stabilizer may also be added.

The polyrethane oligomers on which the compositions of this invention are based are subject to considerable variations as long as the following parameters are observed. These oligomers must utilize a poly-oxyethylene glycol from molecular weight of about 1000 to 2500, preferably about 1500. The final weight of polyoxyethylene glycol in the coating composition must be present in amount of 40% to 75% by weight, more preferably 60% to 70% by weight. This is important in order to achieve the desired water transmitting and water absorbing characteristics of the resultant coating. If these clycols are of an inappropriate size, the resultant cured coatings will be of insufficient physical properties or of insufficient hydrophilicity. Second, in order to achieve reasonable physical properties in the final cured coating, there must be an appropriate concentration of reinforcing functional groups in the polymer thus formed.

The diisocyanates useful in this invention have been found to be of the family of 4,4′-diphenylmethane diisocyanate and 4,4′-methylenebiscyclohexyl diisocyanate. The ratio of diisocyanate to polyoxyethylene glycol is such that the polyoxyethylene glycol is substantially terminated with the diisocyanate rather than cause chain extension, i.e. that the equivalency ratio is approximately 2:1. This provides for an appropriate balance of physical property enhancement while maintaining a lower viscosity coating composition. Radiation curing is achieved by the reaction of unsaturated groups such as acrylates or methacrylates. The unsaturated groups are introduced on to the prepolymer via a hydroxyalkyl acrylate or methacrylate. The reaction of the hydroxy group and isocyanate from the prepolymer provides for an additional urethane group over that already obtained from the initial reaction of the diisocyanate with the polyoxyethylene glycol. The additional urethane groups from the second reaction further enhance the physical properties. The most preferred hydroxyalkyl acrylate is 1,4-butanediol monoacrylate because of the low odour and flexibility it imparts to the final product. Other hydroxyalkyl acrylates or methacrylates may also be used. The 1,4-butanediol monoacrylate is added at approximately 50% to 75% of the required stoichiometry to partially cap the remaining unreacted isocyanate groups of the prepolymer. The amount added is decided so that it results in an unreacted isocyanate number of less than 1.5%. The preferred method is to add about 75% of the required hydroxyalkyl acrylate stoichiometry so that the unreacted isocyanate number is preferably about 1%.

In addition to the making of urethane acrylate, a reactive diluent is added to further lower the viscosity and to provide for the desired properties of the final product. A preferred reactive diluent is one in which the homopolymer of the diluent has a glass transition temperature higher than the use temperature of the coating composition. The most preferred reactive diluent is N-vinyl pyrrolidone. In order to achieve the desired balance of physical properties and hydrophilicity of the final cured product and in order to achieve a low odour final cured hydrophilic coating, it has been found that the reactive diluent needs to be maintained less than 20% of the entire coating composition, and more preferably, less than or equal to 15%. In order for the coating composition to be curable by ultraviolet light a photoinitiator or photosensitizer package must be added. A number of photoinitiators or photosensitizers would be anticipated to provide for the curing of this designed hydrophilic coating composition. The currently understood preferred photoinitiator is believed to be a eutectic mixture of benzophenone and 1-hydroxycyclohexyl phenyl ketone sold under the trade name of Irgacure (trade mark) 500 available from Ciba-Ceigy, Inc. In addition to the above stated ingredients it may be beneficial in certain instances to provide additional stabilization of the coating composition by adding a thermal stabilizing compound such as phenothiazine.

A number of the objects of this invention are provided for by the dual cure mechanism found by not terminating the polyurethane prepolymer with the complete stoichiometric requirements of the hydroxyalkyl acrylate or methacrylate. It has been found that physical properties are enhanced in the final cured coating by this dual cure route and it has been found that higher water transmitting and absorbing characteristics are also seen. As such, it is important in the practice of this invention not to fully cap all isocyanate groups of the urethane oligomer with the hydroxy monoacrylate stated. If all the isocyanate groups of the urethane oligomers are capped, the product will be too stiff and brittle and will not have sufficient physical properties. It will also be found to suffer in its water transmitting and absorbing characteristics. The acrylate is added to the oligomer at a sufficient level to achieve, at minimum, a gel point upon exposure to ultraviolet radiation via the acrylate curing stage. Subsequent to this gel point and early curing, the isocyanate groups cure via a water reaction, thus forming reinforcing urea groups within the matrix of the polymer and building up the final physical properties.

This dual cure path affords a more suitable product both from water transmitting and absorbing characteristics, but more importantly, it is more suitable due to its enhanced physical properties. Some experimentation may be required depending on the starting oligomer used to determine the level of reactive % NCO required for optimizing physical properties and to assure that gel formation occurs via the acrylate functionality employed. It has been seen that the % NCO of the starting oligomer has been preferably found to be around 1% when a polyoxyethylene glycol is used of approximately a molecular weight of 1500. In order to avoid a high crosslink density in the final cured coating, the oligomer of the radiation curable liquid coating composition is terminated such that the sum of the functionality of isocyanate and functionality of acrylate is equal to about 2. The urethane acrylate is thus substantially linear in nature. The coating composition of this invention may be cured by exposure to a diversity of radiation types such as ultraviolet light, beta rays, electron beam and any other actinic radiation.

There are numerous methods of synthesis to produce the required structures of this invention.

The following examples will describe the coating composition of the invention in more detail and describe several examples of uses of the coating composition of this invention. In the following examples, tests were used to characterise several materials. The test procedures were as follows:
MVTR Determination: In the procedure, approximately 70mls of a saturated salt solution of potassium acetate and distilled water was placed into a 133 mls polypropylene cup, having an inside diameter of 6.5 cm at the mouth. An expanded PTFE membrane, having a Gurley number of about 7 seconds, a bubble point of about 179 kPa, thickness of about 37microns, and a weight of 20gms per square meter, available from W.L.Gore and Associates of Newark, Delaware, was heat sealed to the lip of the cup to create a taut, leakproof, microporous barrier containing the salt solution.

A similar expanded PTFE membrane was mounted taut within a 12.5 cm embroidery hoop and floated upon the surface of a water bath. The water bath assembly was controlled at 23°C. plus or minus 0.1°C., utilizing a temperature controlled room and a water circulating bath.

The sample for testing MVTR was cut to approximately a 7.5 cm diameter and was equilibrated in a chamber having a relative humidity of about 86 percent for a minimum of 4 hours. The sample was then placed face down on to the surface of the floating expanded PTFE membrane.

The cup assembly was weighed to the nearest 1/1000 gm and was placed in an inverted manner on to the centre of the test sample.

Water transport was provided by the driving force between the water and the saturated salt solution providing water flux by diffusion in that direction. The sample was tested for 15 minutes and the cup assembly was then removed, weighed again to within 1/1000 gm.

The MVTR of the sample was calculated from the weight gain of the cup assembly and was expressed in grams of water per square meter of sample surface area per 24 hours.

A second cup assembly was simultaneously weighed to within 1/1000 gm and placed on to the test sample in an inverted manner as before. The test was repeated until a steady state MVTR was observed by two repetitive MVTR values. With thin hydrophilic coatings (less than 0.25 mm), it generally has been found to require only one test interval to achieve steady state information within the variability of the test.

Gurley Number Determination: Expanded PTFE was tested for Gurley Number, defined in this patent as the time in seconds for 100 cc of air to flow through 6.45 cm² of test material under a pressure drop of 1.2 kPa. The test device, a Gurley Densometer Model 4110, was employed in a method similar to Method A of ASTM D726-58. The expanded PTFE was clamped into the testing device with a reinforcing mesh screen (150 microns) under the test sample to prevent rupture of the test sample. Six test samples were employed.

Bubble Point Determination: Expanded PTFE was tested for bubble point, defined in this patent as the pressure required to blow the first bubble of air detectable by its rise through a layer of liquid covering the sample. A test device, similar to the one employed in ASTM F316-80, was used consisting of a filter holder, manifold and pressure gauge (maximum gauge pressure of 276 kPa). The filter holder consisted of a base, a locking ring, an o-ring seal, support disk and air inlet. The support disk consisted of a 150 micron mesh screen and a perforated metal plate for rigidity. The effective area of the test sample was 8.0 plus or minus 0.5 cm².

The test sample was mounted on the filter holder and wet with anhydrous methanol until clarified. The support screen was then placed on top of the sample and the top half of the filter holder was tightened in place. Approximately 2 cm of anhydrous methanol was poured over the test sample. The pressure on the test sample was then gradually and uniformly increased by the operator until the first steady stream of bubbles through the anydrous methanol were visible. Random bubbles or bubble stream of the outside edges were ignored. The bubble point was read directly from the pressure gauge.

### EXAMPLE 1

A hydrophilic polyurethane-acrylate chemical composition was prepared from 233.4 gms (1.8672 molar equivalents) of 4,4′-diphenylmethane diisocyanate, 682.4 gms (0.9329 molar equivalents) of 1463 molecular weight polyoxyethylene glycol and 101.8 gms (0.7069 molar equivalents) of 1,4-butandediol monoacrylate, using 152.7 gms (15% pbw of formulation) N-vinyl-pyrrolidone as reactive diluent, 0.17 gms (1.7 ppm of formulation) phenothiazine as thermal stabilizer, 30.534 gms (3% parts by weight of formulation), Irgacure (trade mark) as photoinitiator using the following procedure:
The polyoxyethylene glycol at 80°C was charged into the 1 litre jacketed resin kettle at 80°C and the entire flask was evacuated with vacuum for at least two hours with stirring to degas and remove moisture. The vacuum was then broken and replaced with a dry nitrogen purge. The flaked 4,4′-diphenylmethane diisocyanate was charged into the stirred 80° reaction vessel. The desired percent isocyanate was generally reached within two hours after the addition of the isocyanate as determined by a standard dibutylamine titration (ASTM D2572-80). The isocyanate terminated polyoxyethylene so obtained was evacuated with vacuum and purged with dry air. With increased stirring the reaction was cooled to 45°C. The N-vinyl pyrrolidone was charged to the reaction at 45°C. An immediate viscosity reduction was observed. Immediately following the N-vinyl pyrrolidone addition the reaction was cooled further to 35°C. The phenothiozine and the 1,4-butanediol monoacrylate were charged into the reaction which was maintained at 35°C for approximately 18 hours. The theoretical percent isocyanate was checked by a standard dibutylamine titration method and was found to be in agreement with the theoretical value. The Irgacure (trade mark) 500 was blended into the acrylate-capped prepolymer just before discharge into amber, low density polyethylene containers. Storage of these containers at 25-30°C maintained the polyurethane-acrylate in a low, viscosity, liquid form.

### EXAMPLE 2

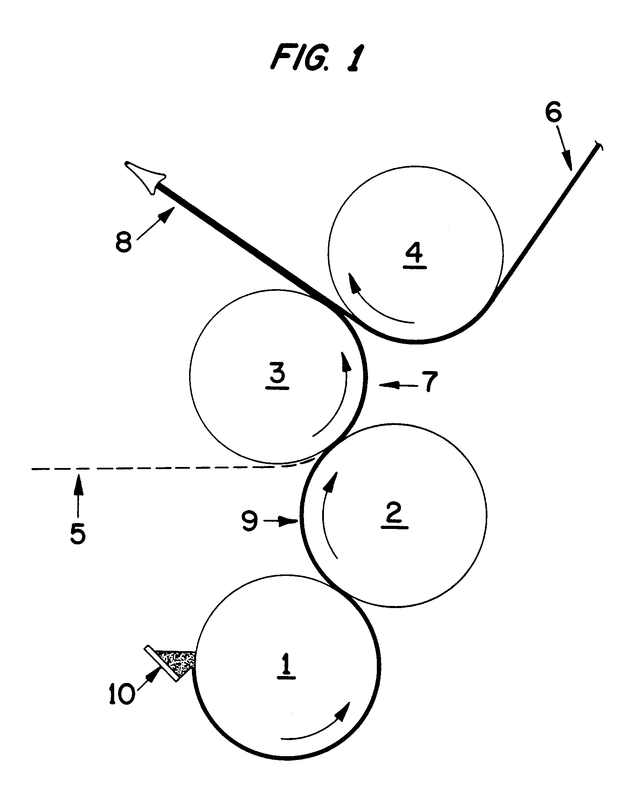

A coated product was made utilizing the coating composition of the present invention and using the apparatus depicted in Figure 1 of the accompanying drawing. A roll coater was used in a 0.425 m wide, 4-roll stack configuration, in line with a tenter frame and take-up. The stack comprised of a gravure roll 1, quadrangular pattern, 33 cells per centimeter, cell depth of 110 microns (33Q/110), nipped at 276 kPa to a Viton (trade mark) (fluoroelastomer available from duPont) rubber roll 2, of 90 durometer, nipped at 276 kPa to a chrome roll 3, nipped at 276 kPa to a silicone roll 4, of 60 durometer. The gravure roll was heated to 25-30°C; the chrome and the rubber rolls in contact were at 25°C. The gravure roll was in contact with a trough and doctor blade assembly 10 containing the polyurethane-acrylate chemistry 9 of Example 1. The melt viscosity of said chemical substance was approximately 13,000 cps as measured on a rheometer using parallel oscillating discs at the application temperature of 30°C. The chemical substance 9 transferred from the gravure roll along the stack until coming in contact with a scaffold material 5. The scaffold material of expanded PTFE was prepared according to the teachings of U.S. Patent No. 3,953,566 and 4,187,390, having a void volume of 87% (as determined by weight, area, PTFE density and measuring thickness by minimal crushing with a spring-loaded micrometer), an overall thickness of ca 18 microns and ca 6 gm/m² in weight. The coating (i.e. combination of scaffold and chemical substance) 7 was brought into contact with a nonwoven substrate of a spunbonded polyamide, 10 gms/m², at the chrome roll/silicone roll nip. The coated product 8 thus made travelled from the nip to the tenter frame, passing under two ultraviolet, 118 watt/cm, mercury bulb ultraviolet lamps. The coated product subsequently ambient cured for 48 hours. The final hydrophilic coated product was found to have a moisture vapour transmission rate (MVTR) of 22,841 g/m²/24 hrs.

### EXAMPLE 3

Using the polyurethane-acrylate composition of Example 1, a flexible layered article suitable for use in waterproof garments was prepared according to the teachings of U.S. Patent Number 4,194,041. Upon application of the polyurethane-acrylate chemistry to the expanded PTFE, (characterised by having a void volume of about 70% determined by weight, area, PTFE density and measuring thickness by minimal crushing with a spring-loaded micrometer, an overall thickness of about 25 microns and a weight of about 16.4 gm/m²), the coating was solidified by passing under two 118 watt/cm, mercury bulb, ultraviolet lamps. Subsequent moisture cure of the coating followed for the next 48 hours. The final flexible layered article was found to have an MVTR of 20,388 g/m²/24 hours. The final coating thickness was approximately 6 microns. This was determined manually from a photomicrograph of a cross-sectional slice of the test sample at 500X magnification and by taking as reference the calibrated bars thereon.

### EXAMPLE 4

Solid polymer sheets were prepared from the polyurethane-acrylate composition of Example 1 by pouring said composition on to a silicone treated plate and allowing the coating composition to flow to approximately 2 mm in thickness. The plate along with the polymer composition was then passed under two 118 watt/cm, mercury bulb, ultraviolet lamps, solidifying a majority of the polymer. It was necessary to invert the polymer sheets and provide for an additional exposure to the UV lamps to get complete solidification of the polymer. Subsequent moisture cure of the sheets followed for the next 48 hours. Once cured the polymer sheets were cut into approximately 5 mm by approximately 10 mm pieces to form hydrophilic granules. The granules were submerged in 25° water until equilibrium was reached where it was found that the hydrophilic granules had absorbed 83% of their own weight of water.

## Claims

1. A process for making a coating of a composition comprising (A) an acrylate capped urethane oligomer of (1) a polyoxyethylene glycol of molecular weight between 1000 and 2500, (2) diisocyanate at a ratio of approximately twice the equivalent weight of the polyoxyethylene glycol, and (3) a hydroxyalkyl acrylate, and (B) a reactive diluent, and curing the composition by exposure to radiation, characterized in that the hydroxy alkyl acrylate does not fully cap all isocyanate groups of the polyurethane oligomer to afford a final radiation curable oligomer terminated in both acrylate and isocyanate functionalities wherein the isocyanate functionality has a percent NCO less than or equal to 1,5% and that subsequent to curing the composition by exposure to radiation the uncapped isocyanate groups are cured via a water reaction.

2. The process according to claim 1, wherein the reactive diluent is less than 20% N-vinyl pyrrolidone.

3. The process according to claim 1 or claim 2 wherein the reactive diluent is less than 15% N-vinyl pyrrolidone.

4. The process according to claim 1 or claim 2 wherein the composition comprises a UV photoinitiator.

5. The process according to claim 1 or claim 2 wherein the composition comprises a stabiliser.

6. The process according to claim 1 or 2 wherein the composition comprises a thermal stabilizer.

7. The process according to claim 1 or claim 2 wherein the diisocyanate is 4,4'-diphenylmethane diisocyanate.

8. The process according to claim 1 or claim 2 wherein the diisocyanate is 4,4'-methylenebiscyclohexyl diisocyanate.

9. The process according to claim 1 or claim 2 wherein the ratio of diisocyanate to polyoxyethylene glycol is about 2:1.

10. The process according to claim 1 or claim 2 wherein the hydroxyalkyl acrylate is 1,4-butanediol monoacrylate.

11. The process according to claim 1 or claim 2 wherein the ratio of diisocyanate to polyoxyethlene glycol to hydroxyalkyl acrylate is 4:2:1.5.

12. The process according to claim 1 or claim 2 wherein the polyoxyethylene glycol is of about 1500 molecular weight.

## Patentansprüche

1. Verfahren zur Herstellung eines Überzuges aus einer Zusammensetzung, die (A) ein mit Acrylat abgeschlossenes Urethanoligomer von (1) Polyoxyethylenglycol mit einem Molekulargewicht zwichen 1000 und 2500, (2) Diisocyanat in einem Verhältnis von etwa dem Doppelten des Äquivalentgewichtes des Polyoxyethylenglycols und (3) Hydroxyalkylacrylat, und (B) ein reaktives Verdünnungsmittel umfaßt und Vernetzen dieser Zusammensetzung durch Bestrahlung,
dadurch gekennzeichnet,
daS das Hydroxyalkylacrylat nicht alle Isocyanatgruppen des Polyurethanoligomers vollständig abschließt, um ein durch Strahlung vernetzbares abschließendes Oligomer zu erzielen, das in sowohl Acrylat- als Isocyanatfunktionalität endet, wobei die Isocyanatfunktionalität einen Prozentsatz an NCO von weniger als oder gleich 1,5% aufweist, und daß anschließend an das Vernetzen der Zusammensetzung durch Bestrahlung die nichtabgeschlossenen Isocyanatgruppen durch Wasserreaktion vernetzt werden.

2. Verfahren nach Anspuch 1, worin das reaktive Verdünnungsmittel weniger als 20% N-Vinylpyrrolidon ist.

3. Verfahren nach Anspruch 1 oder 2, worin das reaktive Verdünnungsmittel weniger als 15% N-Vinylpyrrolidon ist.

4. Verfahren nach Anspruch 1 oder 2, worin die Zusammensetzung einen UV-Photoinitiator umfaßt.

5. Verfahren nach Anspruch 1 oder 2, worin die Zusammensetzung einen Stabilisator umfaßt.

6. Verfahren nach Anspruch 1 oder 2, worin die Zusammensetzung einen Wärmestabilisator umfaßt.

7. Verfahren nach Anspruch 1 oder 2, worin das Diisocyanat 4,4'-Diphenylmethandiisocyanat ist.

8. Verfahren nch Anspruch 1 oder 2, worin das Diisocyanat 4,4'-Methylenbiscyclohexyldiisocyanat ist.

9. Verfahren nach Anspruch 1 oder 2, worin das Verhältnis von Diisocyanat zu Polyoxyethylenglycol etwa 2:1 beträgt.

10. Verfahren nach Anspruch 1 oder 2, worin das Hydroxyalkylacrylat 1,4-Butandiolmonoacrylat ist.

11. Verfahren nach Anspruch 1 oder 2, worin das Verhältnis von Diisocyanat zu Polyoxyethylenglycol zu Hydroxyalkylacrylat 4:2:1,5 beträgt.

12. Verfahren nach Anspruch 1 oder 2, worin das Polyoxyethylenglycol ein Molekulargewicht von etwa 1500 aufweist.

## Revendications

1. Procédé de préparation d'une composition de revêtement comprenant (A) un oligomère d'uréthane coiffé d'acrylate de (1) un polyoxyéthylène glycol de poids moléculaire compris entre 1000 et 2500, (2) un diisocyanate en un rapport d'environ 2 fois le poids équivalent du polyoxyéthylène glycol, et (3) un acrylate d'hydroxyalcoyle et (B) un diluant réactif, et dans lequel on durcit la composition par exposition à une irradiation, caractérisé en ce que l'acrylate d'hydroxyalcoyle ne coiffe pas complètement tous les groupes isocyanates de l'oligomère d'uréthane, pour donner un oligomère final durcissable à l'irradiation terminé par des fonctionnalités tant acrylates qu'isocyanates où la fonctionnalité isocyanate a un pourcentage de NCO inférieur ou égal à 1,5%, et où après le durcissement de la composition par exposition à l'irradiation, on durcit les groupes isocyanates non-coiffés via une réaction aqueuse.

2. Procédé selon la revendication 1, dans lequel le diluant réactif est la N-vinyl-pyrrolidone à moins de 20%.

3. Procédé selon la revendication 1 ou la revendication 2, dans lequel le diluant réactif est la N-vinyl-pyrrolidone à moins de 15%.

4. Procédé selon la revendication 1 ou la revendication 2, dans lequel la composition comprend un photoinducteur d'UV.

5. Procédé selon la revendication 1 ou la revendication 2, dans lequel la composition comprend un stabilisateur.

6. Procédé selon la revendication 1 ou la revendication 2, dans lequel la composition comprend un stabilisateur thermique.

7. Procédé selon la revendication 1 ou la revendication 2, dans lequel le diisocyanate est le diisocyanate de 4,4'-diphénylméthane.

8. Procédé selon la revendication 1 ou la revendication 2, dans lequel le diisocyanate est le diisocyanate de 4,4'-méthylènebiscyclohexyle.

9. Procédé selon la revendication 1 ou la revendication 2, dans lequel le rapport du diisocyanate au polyoxyéthylène-glycol est d'environ 2:1.

10. Procédé selon la revendication 1 ou la revendication 2, dans lequel l'acrylate d'hydroxyalcoyle est le monoacrylate de 1,4-butanediol.

11. Procédé selon la revendication 1 ou la revendication 2, dans lequel le rapport du diisocyanate au polyoxyéthylène glycol et à l'acrylate d'hydroxyalcoyle est de 4:2:1,5.

12. Procédé selon la revendication 1 ou la revendication 2, dans lequel le polyoxyéthylène glycol a un poids moléculaire d'environ 1500.
